# EUROPEAN PATENT SPECIFICATION

(11) **EP 0 387 765 B1**
(45) Date of publication and mention of the grant of the patent: **24.07.1996**
(21) Application number: 90104664.9
(22) Date of filing: 12.03.1990
(51) Int. Cl.: D04B 1/24, A41B 9/00

(54) **Process for manufacturing a semifinished product with multiple-feed circular knitting machines, particularly for producing undershirts, one-piece body garments, briefs or the like**
Verfahren zur Herstellung eines halbfertigen Produktes mittels Rundstrickmaschine mit unterschiedlicher Fadenzuführung, speziell zur Herstellung von Unterhemden, einteiliger Unterwäsche, Slips etc.
Procédé pour fabriquer un produit semi-fini au moyen d'une machine à tricoter circulaire à amenées de fils différentes, notamment pour fabriquer des sous-vêtements, des sous-vêtements d'une pièce, des slips ou similaires

(30) Priority: 16.03.1989 IT 1979089
(43) Date of publication of application: 19.09.1990
(73) Proprietor: LONATI S.p.A., I-20052 Monza (Milano) (IT)
(72) Inventor: Lonati, Francesco, I-25100 Brescia (IT)
(74) Representative: Modiano, Guido, Dr.-Ing.

(56) References cited:
- EP-A- 0 291 752
- DE-A- 2 720 452
- US-A- 4 043 156

## Description

The present invention relates to a process for manufacturing a semi-finished product with multiple-feed circular knitting machines, particularly for producing undershirts, one-piece body garments, briefs or the like.

As is known, tubular knitted products manufactured with circular knitting machines are used to produce undershirts with no lateral seams. Said products have substantially uniform knitting along their entire extension, except for any possible ornamental patterns, and in order to produce undershirts they are first cut according to the required length, four portions being subsequently removed at a longitudinal end of the product so as to respectively define the front and back neck-openings and the openings for the arms. When these four portions are removed, four flaps are defined and are subsequently sewn together in pairs so as to obtain the shoulders of the undershirt.

A finishing border is applied along the cutting lines for the removal of the four portions, and the lower end of the undershirt is subjected to a hemming operation with the possible application of an elastic strip.

With this process, the waste consequent to the removal of the portions corresponding to the neck and arm openings considerably affect production costs, since the thread used for this kind of product is generally of high quality.

The cutting operations furthermore generally require the use of templates in order to obtain sufficiently precise results, imply relatively long times and in turn affect production costs.

Semi-finished products for producing briefs are also known which are also manufactured with circular machines which are similar to circular knitting machines for manufacturing socks and stockings with an enlarged needle cylinder.

A first kind of product is manufactured by means of a process of the type known from US-A-4,043,156 and also from EP-A2-0,291,752, which substantially consists in initially providing an elastic hem and, after said hem, a section of tubular knitting, using practically all the needles of the needle cylinder. In a subsequent step, an increasing number of needles belonging to two sets of needles are excluded from knitting; said sets of needles are angularly mutually spaced with respect to the axis of the needle cylinder so as to define, on the lateral surface of the product, two missing portions which correspond to the leg openings of the briefs to be produced. The number of needles excluded from knitting gradually increases up to a maximum value to obtain a widening of the leg openings and to obtain such a length of the portions between the two missing portions as to allow their overlapping and sewing to obtain the crotch of the briefs. The thread or threads are cut, at the beginning of the sets of needles which are not knitting, i.e. at the edges of the leg openings, by means of appropriate devices fitted to the circular knitting machine being used.

The product is finished by applying an elastic tape or lace strip to the edges which delimit the leg openings and by sewing the overlapping ends of the portions of knitting arranged between the two missing portions so as to provide, as mentioned, the crotch of the briefs.

This kind of product has the disadvantage that very often, since the thread is cut at the edges of the leg openings, broken meshes or flaws can occur starting from the edge of the leg openings during the completion of the product, since it is generally pneumatically tensioned, or during its expulsion from the machine or again during the application of the elastic tape, with the consequence of having to reject the product.

A second kind of product is manufactured with a process which instead of cutting the threads at the edge of the leg openings, obtains a complete tubular product, and two portions knitted with different stitches with respect to those used for the remaining part of the product are provided at the leg openings, or stitches are knitted along lines corresponding to the border of the leg openings, so as to allow easy identification of the portions to be successively cut in order to provide the leg openings.

Knitting with different stitches of the entire portions to be removed or the delimiting thereof by means of a line knitted with different stitches with respect to the remaining part of the product allows greater precision and speed in the product finishing operations.

This process safely excludes the possibility of broken meshes or flaws before the finishing operations, but has the disadvantage of entailing considerable waste for each product. Also known from EP-A-0 382 968 and EP-A-0 386 356, which constitute prior art pursuant to Art. 54(3) EPC, is a process as defined in the preamble of claim 1, and a product as defined in the preamble of claim 4.

The aim of the present invention is to obviate the above described disadvantages by providing a process for manufacturing semi-finished products for producing undershirts, one-piece body garments, briefs or the like, which avoids the occurrence of broken meshes or flaws in the product during its manufacture and reduces manufacturing costs by reducing losses due to waste.

Within the scope of this aim, an object of the invention is to provide a process by means of which the finishing operations are extremely simple and rapid.

Another object of the invention is to provide a process which allows to reduce waste losses in products predominantly manufactured with stitches composed of a single thread.

This aim, these objects and others which will become apparent hereinafter are achieved by a process for manufacturing a semi-finished product as defined in the appended claims.

Further characteristics and advantages of the invention will become apparent from the description of some preferred but not exclusive embodiments of the process according to the invention, illustrated only by way of non-limitative example in the accompanying drawings, wherein:
figure 1 is a lateral elevation view of a product for manufacturing undershirts, manufactured with a first embodiment of the process according to the invention;
figure 2 is a view of an undershirt obtained with a product of the kind illustrated in figure 1;
figure 3 is a lateral elevation view of a product for manufacturing undershirts, produced with the process according to the invention in a second embodiment;
figure 4 is a lateral elevation view of a product for manufacturing one-piece body garments, obtained with a third embodiment of the process according to the invention;
figure 5 is a view of a one-piece body garment obtained with a product of the kind illustrated in figure 4;

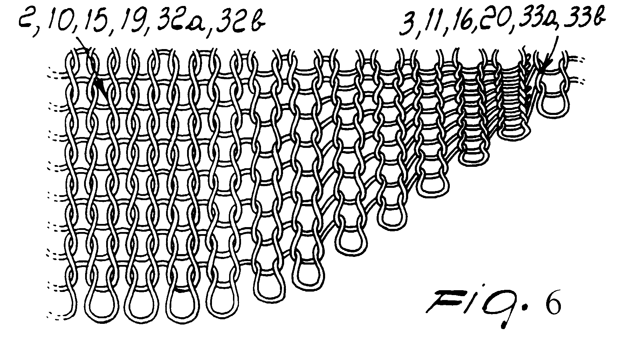

figure 6 is a view of an enlarged portion of the various products illustrated in the preceding figures in the region of a portion to be removed which is adjacent to the remaining part of the product.

With reference to the above described figures, the process according to the invention substantially consists in producing, with a multiple-feed circular knitting machine, a body of knitting with tubular extension of the required length and in knitting the portions of the product which are to be removed by using a number of machine feeds which is smaller than the number of feeds used to knit the remaining part of the product. The threads deriving from the feeds which are not used to knit said portions to be removed are cut, in each instance, by the machine proximate to the edges where the knitting of said portions to be removed begins and are again fed to the needles which knit the remaining part of the product proximate to the edges where the knitting of the portions to be removed ends.

Stitches which are optically distinguishable from the contiguous stitches are advantageously knitted in regions of the product which are proximate to the portions to be removed, so as to define a guiding line for the subsequent product finishing operations, as will become apparent hereinafter.

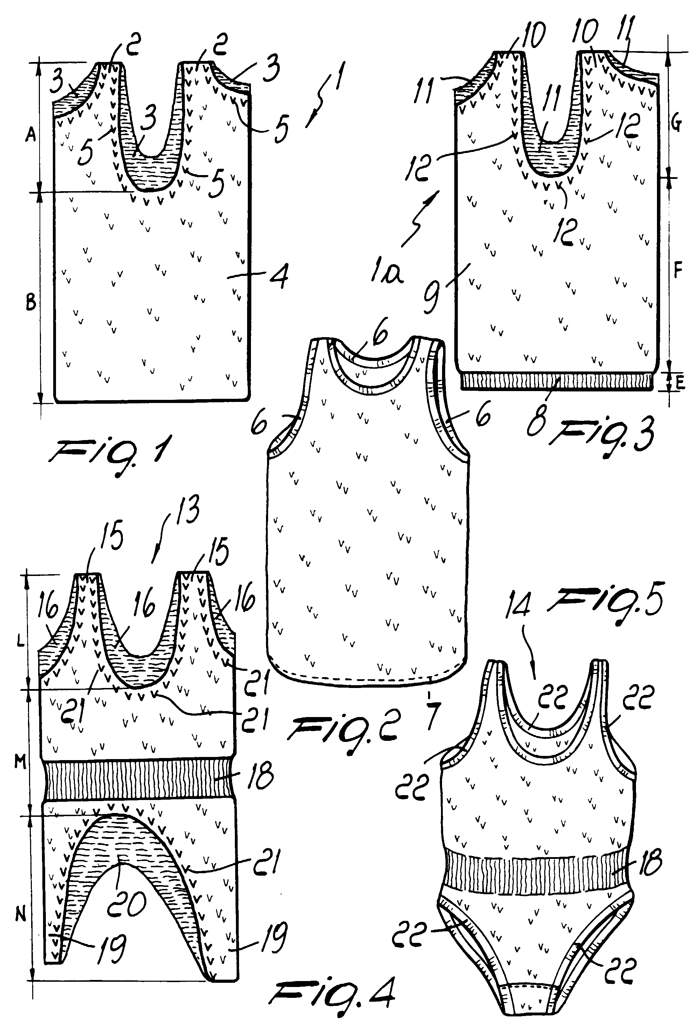

More particularly, with particular reference to figure 1, the process according to the invention comprises, for manufacturing a product 1 according to a first embodiment, a first step A during which a first substantially tubular section of knitting is produced, composed of four first portions 2 angularly spaced with respect to one another relative to the axis of the product and alternated with four second portions 3 intended to be removed. In order to manufacture said first section of knitting, the needles of the needle cylinder are divided, in a known manner by selection, into four first sets intended to knit the first portions 2, alternated with four second sets of needles intended to knit the second portions 3.

According to the invention, the needles of the first sets knit, i.e. engage, the thread which is fed at a preset number of machine feeds, whereas the needles of the second sets knit, i.e. engage, the thread which is fed to them only at a smaller number of machine feeds.

More in particular, for example in the case of a four-feed machine, the sets of needles which knit the first portions 2 are raised to knit to take up the thread fed to each feed, whereas the sets of needles which knit the second portions 3 are raised to knit to take up the thread at a single feed. The three threads of the feeds at which the needles which form the second portions 3 do not knit are not engaged by said needles, are cut by means of a known device provided on the machine proximate to the edges where the knitting of the second portions begins and are again engaged by the needles which belong to the first sets. In this manner the second portions 3 have a smaller number of rows than said first portions 2. More particularly, in the case of four-feed machines, there is a row of knitting of the second portions 3 for every four rows of knitting of the first portions 2. In this manner, in four-feed machines, by using a single feed to knit the second portions 3 and by using all the machine feeds to knit the first portions 2, one achieves a 75% saving of the thread which would be required if the second portions 3 were knitted like the first portions 2. The maximum possible saving for the knitting of the second portions 3 would obviously be respectively 50% with two-feed machines and 87.5% with eight-feed machines.

Due to the reduction of the number of rows of knitting which is provided in the production of the second portions 3, said second portions have a height, measured parallel to the axis of the product, which is lower than the height of the first portions, as is evident from the accompanying drawings. As shown in particular in figure 9, the knitting thickness increases in the region of the first portions which is adjacent to the second portions, but said thickening does not affect the quality of the product since the region in which it occurs is limited to a small number of stitches and is destined to be removed together with the second portions 3 during the finishing operations.

During this first step A of the process it is possible to select the needles, by means of selection devices commonly used in knitting machines for manufacturing socks and stockings, so as to increase the needles of the first sets by subtracting them from the needles of the second sets or vice versa, so as to obtain the required configuration for the second and first portions. After a preset number of rows it is furthermore possible, again by means of known selection devices, to divide the needles only into two first sets and into two second sets to end the second portions which correspond to the neck-openings, while the knitting of the second portions, corresponding to the arm openings, continues.

A second step B is performed after the first step A; during said second step, a section of knitting 4 is knitted in a known manner substantially like the first portions 2.

When the product reaches the required length, knitting is ended in a known manner and the product is removed from the machine.

Stitches 5, arranged proximate to the second portions 3 and easily distinguishable from the others in that they define guiding lines for the finishing operation, are knitted during the execution of the first step A and shortly after the beginnning of the second step B. Said stitches can be constituted for example by held stitches or by stitches knitted with an additional thread of a different color.

The semi-finished product can subsequently be subjected, in a simple and rapid manner, to finishing operations by means of a known machine of the cut-and-sew type, by means of which finishing borders 6 are applied, following the guiding lines defined by the stitches 5, along the neck and arm openings. The machine simultaneously removes the second portions 3.

The shoulders of the undershirt are then obtained by sewing together the free ends of the first portions 2 in pairs, as illustrated in figure 2, and a folded hem 7 is possibly provided at the lower end of the undershirt.

This last operation of hemming the lower end of the undershirt can be avoided if a second embodiment of the process according to the invention is used; said second embodiment allows to obtain a product 1a which is already provided with a folded hem along its lower end, as illustrated in figure 3.

More particularly, in this second embodiment, the knitting of the product begins from its lower end with a first step E during which the folded hem 8 having a tubular extension is produced. Said hem 8 can be produced in a known manner as for the execution of the upper elastic hem of panty-hoses. If required, the hem 8 can be produced by adding an elastic thread so as to obtain an elastic folded hem.

After this first step E, a second step F is performed during which a section of knitting 9, with tubular extension starting from the elastic hem 8, is produced, and a third step G is performed during which first portions 10 are produced as continuation of the portion 9 and are alternated with second portions 11 to be removed, substantially as already described with reference to the first embodiment, taking into account the fact that in this second embodiment the product is manufactured starting from the bottom.

In this second embodiment, too, during the forming of the first portions 10 and the section of knitting 9, proximate to the second portions 11, it is possible to produce stitches 12 substantially like the stitches 5 so as to define a guiding line for the successive finishing operations.

With a third embodiment of the process according to the invention it is also possible to manufacture a product 13 for the production of one-piece body garments 14, as illustrated in figures 4 and 5.

With reference in particular to figure 4, in this third embodiment the process comprises a first step L and a second step M which are performed substantially like the steps A and B which have already been described with reference to the first embodiment, so as to obtain first portions 15 alternated with second portions 16 to be removed in a first section of knitting, as well as a second section of knitting 17 having tubular extension defining a continuation of the first portions 15.

During the execution of the section of knitting 17, it is possible to insert, preferably in preset regions, one or more elastic threads so as to obtain for example an elastic band 18 in the region of the abdomen. This can be obtained be feeding the needles of the machine with an elastic thread by means of an appropriate thread guide which is activated when required.

A third step N is subsequently performed during which two third portions 19 are manufactured as continuation of the second section of knitting 17 and are alternated with two fourth portions 20 intended to be removed to define the leg openings of the one-piece body garment.

Said fourth portions 20 are manufactured substantially as already described for the execution of the second portions 3 of the first embodiment of the process, and said fourth portions 20 are advantageously knitted with a number of stitches which increases starting from the second section of knitting 17, subtracting from the stitches of the third portions 19, so as to obtain an adequate shaping of the leg openings.

In this manner, the fourth portions 20 and the second portions 16 are manufactured using a single machine feed, or in any case a number of feeds which is smaller than the number of feeds used to knit the remaining part of the product, as already described for the first embodiment of the process. Stitches 21, optically distinguishable with respect to the contiguous stitches, as already described for the stitches 5, can be furthermore provided proximate to the fourth portions 20 and to the second portions 16.

When the product reaches the required length, knitting is ended in a known manner and the product is unloaded from the machine.

In this case, too, the finishing operations can be performed in a simple and rapid manner by means of a cut-and-sew machine which removes the second portions 16 and the fourth portions 20 and simultaneously applies finishing borders 22.

The upper ends of the first portions 15 are sewn together in pairs to obtain the shoulder straps of the one-piece body garment, whereas buttons or the like are applied to the free ends of the fourth portions 20 for the mutual engagement thereof.

In practice it has been observed that the process according to the invention fully achieves the intended aim, since by knitting the portions of the product intended to be removed using a number of machine feeds which is smaller than the number of feeds used for the remaining part of the product, the risk of broken meshes, ladders or flaws during knitting is excluded and considerably reduced waste costs are simultaneously achieved.

The process thus conceived is susceptible to numerous modifications and variations, all of which are within the scope of the inventive concept; all the details may furthermore be replaced with technically equivalent elements.

In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for manufacturing a semi-finished product (1, 1a, 13) with multiple-feed circular knitting machines, comprising;
- a step (A,G, L) of manufacturing a body of knitting (2) having a substantially tubular extension, knitting portions (3, 11, 20) of said body, intended to be removed, with a number of machine feeds which is smaller than the number of feeds used to knit the remaining part (2, 10, 19, 32a, 32b) of the product, the threads arriving from the feeds which are not used to knit said portions (3, 11, 20, 33a, 33b) to be removed being cut in each instance proximate to the edges where the knitting of said portions (3, 11, 20, 33a, 33b) to be removed begins and being again fed proximate to the edges where the knitting of said portions (3, 11, 20, 33a, 33b) to be removed ends, and
- at least one second step (B, M) of knitting a second section of knitting (4, 17) having a tubular extension, knitted substantially like said first portions (2, 15),
**characterized in that** said step of manufacturing a body of knitting (A, G, L) comprises knitting a first section of knitting having a tubular extension composed of four first portions (2, 15) which are mutually angularly spaced with respect to the axis of the product and are alternated with four second portions (3, 16) to be removed, whereby to produce undershirts, one-piece body garments, or the like.

2. Process according to claim 1, characterized in that after said second step (M) a third step (N) is performed during which three portions (19) are knitted as continuations of said second section of knitting (17), said three portions (19) being mutually angularly spaced with respect to the axis of the product and being alternated with two fourth portions (20) to be removed in order to produce a one-piece body garment (13).

3. Process according to claim 1, characterized in that it comprises: a first step (E) of manufacturing a section of knitting (9) having a tubular extension starting from said folded hem (8), a third step (G) of manufacturing four first knitting portions (10) as continuation of said tubular section of knitting (9), said first knitting portions (10) being angularly mutually spaced with respect to the axis of the product and being alternated with four second portions (11) intended to be removed in order to produce an undershirt.

4. Semi-finished product comprising a body of knitting having a substantially tubular extension with portions (3, 11, 20) of said body, intended to be removed, manufactured with a number of rows of knitting which is smaller than the number of rows of knitting required, for an equal portion to be knitted, with the knitting used for the remaining part (2, 10, 19) of the product, **characterized in that** it comprises a first section of knitting having a tubular extension composed of four first portions (2, 15) which are mutually angularly spaced with respect to the axis of the product and are alternated with four second portions (3, 16) to be removed, for manufacturing undershirts, one-piece body garments, or the like.

5. The use of a multiple-feed circular knitting machine for carrying out the method as defined in claims 1-3, for manufacturing undershirts, one-piece body garments, or the like.

## Patentansprüche

1. Verfahren zur Herstellung eines Halbfabrikates (1, 1a, 13) auf vielsystemigen Rundstrickmaschinen mit
- einem Schritt (A, G, L) zur Herstellung eines Strickkörpers (2) mit im wesentlichen schlauchförmiger Erstreckung und zu entfernenden Strickteilen (3, 11, 20) auf einer Anzahl von Zufuhrstellen, die kleiner ist als die Anzahl der zum Stricken des restlichen Teils (2, 10, 19, 32a, 32b) des Halbfabrikates verwendeten Zufuhrstellen, wobei die Fäden, die von den nicht zum Stricken der genannten zu entfernenden Teile (3, 11, 20, 33a, 33b) benutzten Zufuhrstellen ankommen, jeweils dicht neben den Rändern, wo das Stricken der genannten zu entfernenden Teile (3, 11, 20, 33a, 33b) beginnt, abgeschnitten und dicht neben den Rändern, wo das Stricken der genannten zu entfernenden Teile (3, 11, 20, 33a, 33b) endet, wieder zugeführt werden, und mit
- zumindest einem zweiten Schritt (B, M) zum Stricken eines zweiten schlauchförmigen Strickabschnittes (4, 17), gestrickt im wesentlichen wie die genannten ersten Teile (2, 15),
**dadurch gekennzeichnet**, daß der genannte Schritt zur Herstellung eines Strickkörpers (A, G, L) das Stricken eines ersten Strickabschnitts umfaßt, der eine schlauchförmige Erstreckung aufweist und aus vier ersten Teilen (2, 15) besteht, die gegenüber der Achse des Halbfabrikates jeweils einen Winkelabstand aufweisen und mit vier zweiten zu entfernenden Teilen (3, 16) alternieren, um so Unterhemden, einteilige Bekleidungsstücke oder dergl. herzustellen.

2. Verfahren nach Anspruch 1, **dadurch gekennzeichnet**, daß nach dem genannten zweiten Schritt (M) oin dritter Schritt (N) ausgeführt wird, während dem als Fortsetzung des genannten zweiten Strickabschnittes (17) drei Teile (19) gestrickt werden, die gegenüber der Achse des Halbfabrikates jeweils einen Winkelabstand aufweisen und mit zwei vierten zu entfernenden Teilen (20) alternieren, um so ein einteiliges Bekleidungsstück (13) herzustellen.

3. Verfahren nach Anspruch 1, **gekennzeichnet** durch folgende Verfahrensschritte:
- ein erster Schritt (E) zur Herstellung eines schlauchförmigen, an dem genannten umgelegten Saum (8) beginnenden Strickabschnitts (9);
- ein dritter Schritt (G) zur Herstellung von vier ersten, eine Fortsetzung des genannten schlauchförmigen Strickabschnitts (9) darstellenden Strickteilen (10), die gegenüber der Achse des Halbfabrikates jeweils einen Winkelabstand aufweisen und mit vier zweiten zu entfernenden Teilen (11) alternieren, um so ein Unterhemd herzustellen.

4. Halbfabrikat mit einem im wesentlichen schlauchförmigen Strickkörper mit von ihm zu entfernenden Teilen (3, 11, 20), hergestellt mit einer Anzahl von Maschenreihen, die kleiner ist als die zum Stricken eines gleichen Teils benötigte Anzahl beim Stricken des restlichen Teils (2, 10, 19) des Halbfabrikates,
**dadurch gekennzeichnet**, daß es einen ersten schlauchförmigen Strickabschnitt aufweist, der aus vier ersten Teilen (2, 15) besteht, die gegenüber der Achse des Halbfabrikates jeweils einen Winkelabstand aufweisen und mit vier zweiten zu entfernenden Teilen (3, 16) alternieren, um so Unterhemden, einteilige Kleidungsstücke oder dergl. herzustellen.

5. Verwendung einer vielsystemigen Rundstrickmaschine zur Durchführung des Verfahrens nach einem der Ansprüche 1 bis 3 zur Herstellung von Unterhemden, einteiligen Bekleidungsstücken oder dergl.

## Revendications

1. Procédé pour fabriquer un produit semi-fini (1, la, 13) avec des métiers à tricoter circulaires à chutes multiples, comprenant :
- une étape (A, G, L) dans laquelle on fabrique un corps de tricot (2) s'étendant sous forme pratiquement tubulaire, on tricote des parties (3, 11, 20) dudit corps, prévues pour être enlevées, avec un nombre de chutes du métier qui est plus petit que le nombre de chutes utilisées pour tricoter la partie restante (2, 10, 19, 32a, 32b) du produit, les fils en provenance des chutes non utilisées pour tricoter lesdites parties (3, 11, 20, 33a, 33b) à enlever étant coupés dans chaque cas à proximité des bords où commence le tricotage desdites parties (3, 11, 20, 33a, 33b) à enlever et étant à nouveau amenés à proximité des bords où se termine le tricotage desdites parties (3, 11, 20, 33a, 33b) à enlever, et
- au moins une deuxième étape (B, M) dans laquelle on tricote une deuxième section de tricot (4, 17) s'étendant sous forme tubulaire, tricotée pratiquement comme lesdites premières parties (2, 15),
caractérisé en ce que ladite étape dans laquelle on fabrique un corps de tricot (A, G, L) comprend le tricotage d'une première section de tricot s'étendant sous forme tubulaire, composée de quatre premières parties (2, 15) qui sont angulairement espacées les unes des autres par rapport à l'axe du produit et qui alternent avec quatre deuxièmes parties (3, 16) à enlever, pour produire ainsi des maillots de corps, des justaucorps, ou l'analogue.

2. Procédé selon la revendication 1, caractérisé en ce que, après ladite deuxième étape (M), on effectue une troisième étape (N) pendant laquelle on tricote trois parties (19) en tant que prolongements de ladite deuxième section de tricot (17), lesdites troisièmes parties (19) étant angulairement espacées les unes des autres par rapport à l'axe du produit et alternant avec deux quatrièmes parties (20) à enlever pour produire un justaucorps (13).

3. Procédé selon la revendication 1, caractérisé en ce qu'il comprend : une première étape (E) dans laquelle on fabrique une section de tricot (9) s'étendant sous forme tubulaire en partant dudit bord replié (8), une troisième étape (G) dans laquelle on fabrique quatre premières parties de tricot (10) en tant que prolongement de ladite section tubulaire de tricot (9), lesdites premières sections de tricot (10) étant angulairement espacées les unes des autres par rapport à l'axe du produit et alternant avec quatre deuxièmes parties (11) prévues pour être enlevées afin de produit un maillot de corps.

4. Produit semi-fini comprenant un corps de tricot s'étendant sous forme pratiquement tubulaire avec des parties (3, 11, 20) dudit corps, prévues pour être enlevées, fabriquées avec un nombre de rangs de tricot plus petit que le nombre de rangs de tricot exigé, pour une égale partie à tricoter, par le tricotage utilisé pour la partie restante (2, 10, 19) du produit, caractérisé en ce qu'il comprend une première section de tricot s'étendant sous forme tubulaire, composée de quatre premières parties (2, 15) qui sont angulairement espacées les unes des autres par rapport à l'axe du produit et qui alternent avec quatre deuxièmes parties (3, 16) à enlever, pour fabriquer des maillots de corps, des justaucorps, ou l'analogue.

5. Utilisation d'un métier à tricoter circulaire à chutes multiples pour mettre en oeuvre le procédé selon les revendications 1 à 3, pour fabriquer des maillots de corps, des justaucorps, ou l'analogue.
